# EUROPÄISCHE PATENTSCHRIFT

(11) **EP 1 564 028 B1**
(45) Veröffentlichungstag und Bekanntmachung des Hinweises auf die Patenterteilung: **12.03.2008**
(21) Anmeldenummer: 04030565.8
(22) Anmeldetag: 23.12.2004
(51) Int. Cl.: B60B 3/02, G01M 1/30, F16F 15/32

(54) **Matchmaschine**
Matching machine
Machine pour mettre en correspondance une roue d'un véhicule

(30) Priorität: 11.02.2004 DE 102004006822
(43) Veröffentlichungstag der Anmeldung: 17.08.2005
(73) Patentinhaber: Schedl Automotive System Service GmbH & Co. KG, 51175 Bonn (DE)
(72) Erfinder: Grommes, Wolfgang, 53229 Bonn (DE); Albersmann, Rainer, 48317 Drensteifurt (DE)
(74) Vertreter: COHAUSZ DAWIDOWICZ HANNIG & SOZIEN

(56) Entgegenhaltungen:
- EP-A- 1 243 444
- JP-A- 60 236 809
- US-A- 5 826 319

## Beschreibung

Die Erfindung betrifft eine Vorrichtung zur drehwinkelgenauen Ausrichtung (Matchen) eines Reifens auf dem Rad (Felge), wobei die Ausrichtung dadurch erfolgt, dass das Rad gegenüber dem Reifen relativ verdreht wird

Matchen ist ein Verfahren bei der Reifenmontage, das zum optimalen Rundlauf des Reifens beiträgt. Dabei werden die Rundlaufabweichungen von Rad und Reifen so miteinander kombiniert, daß sie sich gegenseitig weitgehend neutralisieren. Die Reifen werden vom Hersteller vermessen und mit einem Matchpunkt an der Reifenflanke gekennzeichnet. Analog verfahren auch die Lieferanten der Räder ("Felge"). Diese beiden Matchpunkte werden in einer Matchmaschine durch drehen des Rades übereinandergebracht.

Es ist bekannt, den Matchvorgang durch Verdrehen des Rads ("Felge") bei stillstehendem Reifen durchzuführen. Das Rad wird hierfür zu beiden Seiten (oben und unten) durch Kunststoffelemente geklemmt. Die Anweisung über den erforderlichen Verdrehwinkel erhält die Maschine über eine Baugruppe mit Kamera und Bildauswertung. Die Ermittlung des Drehwinkels erfolgt in einer vorgelagerten Station, da aufgrund der Art der Klemmung des Rades durch zwei Elemente von oben sowie von unten eine Erfassung eines Matchpunktes unmöglich ist, da das Rad von beiden Seiten von der Klemmvorrichtung abgedeckt ist.

Das bekannte Verfahren zur Durchführung des Matchvorgangs umfasst die folgenden Verfahrensschritte:
■ Zuführen eines Komplettrades bestehend aus einem Rad mit einer ersten Markierung (Matchpunkt) und einem Reifen mit einer zweiten Markierung (Matchpunkt) zur Vorrichtung;
■ Aufspannen des Rades durch Betätigung einer Spanneinheit;
■ Eindrücken der Reifenflanken mittels mehrerer Spannbacken, um die Reifenflanken von dem Rad abzuheben;
■ Verdrehung des Rades um den erforderlichen Drehwinkel mittels einer drehbaren Spanneinheit sodass die erste Markierung (Matchpunkt) des Rades mit der zweiten Markierung (Matchpunkt) des Reifens auf der selben Winkelposition liegen;
■ Freigabe des Reifens durch Lösen der Spannbacken und Freigabe des Rades durch Lösen der Spanneinheit;
■ Abtransport des Komplettrades aus der Vorrichtung.

Nachteilig dabei ist es, dass zwei Stationen für den gesamten Vorgang, d.h. eine Kamerastation mit Kamera und Bildauswertung zur Berechnung des erforderlichen Drehwinkels und eine weitere Station als Matchstation zur Durchführung des eigentlichen Matchens, d.h. des Verdrehvorgangs, notwendig sind.

Aus der gattungsgemäßen US 5,826,319 ist ein Verfahren und einer derartige Vorrichtung bekannt, wobei Sapnnelemente in die Innenseite des Rades einfahren. Hierdurch ist die Gefahr von Beschädigungen gegeben.

Aus der EP 1 243 444 A1 ist ein Verfahren zum Matchen von Rädern/Reifen bekannt.

Die Aufgabe der Erfindung besteht darin, eine Vorrichtung der eingangs genannten Art derart weiterzubilden, so dass alle zum Matchen bei der Rad-Reifenmontage erforderlichen Verfahrensschritte in einer einzigen Vorrichtung bzw. Station durchführbar sind, ohne dass die,Gefahr von Beschädigungen des Rades bestehen.

Eine weitere Aufgabe der Erfindung besteht darin, das bekannte Matchverfahren derart weiterzubilden, dass dieses Vereinfacht wird und in einer einzigen Vorrichtung bzw. Station durchführbar ist.

Diese Aufgabe wird erfindungsgemäß durch eine Vorrichtung gemäß Anspruch 1, bzw. durch ein Verfahren gemäß Anspruch 7 gelöst.

Besonders vorteilhaft ist, dass Spannbacken in der Form mehrerer Umfangssegmente, insbesondere vier Umfangssegmente, vorgesehen sind, die gegen die Reifenflanke bewegbar sind. Zur Minimierung der Reibung erfolgt das seitliche Eindrücken der Reifenflanken bis über den Hump um die Reifenflanken von dem Rad abzuheben. Die Umfangssegmente (Backen) werden auf den Durchmesser des Rades eingestellt. Wenn diese sich gegen die Reifenflanke bewegen, wird diese über den Hump geschoben: Der Reifen gibt das Rad frei. Hierduch wird das Verdrehen des Rades relativ zum Reifen ermöglicht bzw. erleichtert, da die Reibung zwischen Rad und Reifen hierdurch extrem verkleinert wird.

Dabei sind die Spannbacken auf den Durchmesser des Rades einstellbar, so dass die Vorrichtung auf verschiedene Rad-/Reifentypen bzw. Rad-/Reifengrößen anwendbar ist.

Vorteilhaft ist, dass bei dem Verfahren zur drehwinkelgenauen Ausrichtung (Matchen) eines Reifens auf dem Rad (Felge), wobei die Ausrichtung insbesondere dadurch erfolgt, dass das Rad gegenüber dem stillstehenden Reifen verdreht wird, die folgenden Schritte in ein und derselben Vorrichtung bzw. Station vorgesehen sind:
■ einer in ein Mittenloch des Rades eingreifenden Spanneinheit und das Aufspannen des Rades durch Betätigung der Spanneinheit, durch die das Rad Nach dem Zuführen des Komplettrades erfolgt ein Ergreifen des Rades mittels drehbar oder festhaltbar ist;
■ Erfassen der ersten Markierung (Matchpunkt) des Rades und der zweiten Markierung (Matchpunkt) des Reifens mittels eines Kamerasystems;
■ Auswertung des Kamerabildes und Berechnung des erforderlichen Drehwinkels;
■ Eindrücken der Reifenflanken mittels mehrerer, insbesondere vier Umfangssegmente (Spannbacken), um die Reifenflanken von dem Rad abzuheben;
■ Verdrehung des Rades um den erforderlichen Drehwinkel mittels der drehbaren Spanneinheit sodass die erste Markierung (Matchpunkt) des Rades mit der zweiten Markierung (Matchpunkt) des Reifens auf der selben Winkelposition liegen;
■ Freigabe des Reifens durch Lösen der Spannbacken;
■ Freigabe des Rades durch Lösen der Spanneinheit;
■ Abtransport des Komplettrades aus der Vorrichtung.

Hierdurch ist es möglich, dass der Matchvorgang in einer einzigen Station durchführbar ist, d.h. die Ermittlung des erforderlichen Drehwinkels sowie der Matchvorgang selbst können in der gleichen Station erfolgen, da dadurch, dass das Rad mittels einer in ein Mittenloch des Rades eingreifenden Spanneinheit ergreifbar und drehbar oder festhaltbar ist, die Sicht auf das Rad und damit auf dem am Rad befindlichen Matchpunkt insbesondere von der der Spanneinheit gegenüberliegenden Seite frei bleibt und somit von einem Kamerasystem erfassbar ist.

Weiterhin vorteilhaft ist, dass das Rad beim Aufspannen aufgrund der Art des Aufspannens durch ein Eingreifen in das Mittenloch des Rades nicht aus seiner Mittellage in der Matchstation heraus bewegt wird. Ein weiterer Vorteil dieses Prinzips ist, dass nicht nur eine Kontrolle nach dem Matchvorgang sondern auch eine möglicherweise erforderliche Korrektur durch einen zweiten Matchvorgang unmittelbar stattfinden kann.

Des weiteren vorteilhaft ist, dass eine Station, nämlich die der eigentlichen Matchstation vorgelagerte Kamera- und Bildauswertungsstation entfällt, da diese Funktion in die eigentliche Matchstation integriert ist. Weiterhin entfällt dadurch ein Transportvorgang zwischen zwei getrennten Stationen.

Vorteilhaft ist weiter, dass aufgrund des Aufspannens des Rades durch das Eingreifen in das Mittenloch des Rades auch solche Radtypen gematcht werden können, bei denen die Schüssel übersteht, d.h. bei denen die Schüssel das Felgenhorn überragt. Bisher war es erforderlich, für solche Felgentypen speziell an das Raddesign angepasste Klemmwerkzeuge zu verwenden, mit der Folge des Rüstaufwandes bei der Matchmaschine für das Auswechseln der Klemmwerkzeuge bei der Verarbeitung verschiedener Felgentypen.

Weitere vorteilhafte Ausgestaltungen der Erfindung sind in den Unteransprüchen angegeben.

Besonders vorteilhaft ist es, wenn die in das Mittenloch des Rades eingreifende Spanneinheit aufspreizbare Elemente, insbesondere Spannringsegmente oder Spannringsektoren, aufweist. Hierdurch ist es möglich, das Rad mittels der Spanneinheit zuverlässig zu spannen ohne dass das Rad aus der Mittellage heraus bewegt wird, da ein gleichmäßiges Aufspannen durch die Spreizung der Spanneinheit erfolgt.

In einer bevorzugten Ausführungsform ist eine Kamera zur Erfassung einer ersten Markierung (Matchpunkt) an dem Rad und einer zweiten Markierung (Matchpunkt) an dem Reifen insbesondere zentrisch über der Spannstation angeordnet ist. Vorteilhaft hierbei ist, dass sowohl die Erfassung der Markierungen, d.h. der Matchpunkte an dem Rad und an dem Reifen durch ein Kamerasystem sowie die Berechnung des erforderlichen Drehwinkels als auch der eigentliche Matchvorgang in ein und derselben Station durchgeführt werden können. Außerdem kann eine Kontrolle nach dem Matchvorgang und eine möglicherweise erforderliche Korrektur in einem zweiten Matchvorgang unmittelbar stattfinden.

Vorzugsweise ist für die Kamera zumindest ein Blitzlicht, insbesondere ein ringförmiges Blitzlicht, d.h. ein Rundblitz, vorgesehen, wodurch auf die Anforderungen der Kamera abgestimmte Lichtverhältnisse geschaffen werden können.

In einer weiteren bevorzugten Ausführungsform Mittel vorgesehen sind, mittels derer der erforderliche Drehwinkel des Rades gegenüber dem Reifen berechenbar ist, d.h. dass das Kamerabild unmittelbar ausgewertet werden kann, um den erforderlichen Drehwinkel zu berechnen und damit die Matchvorrichtung anzusteuern.

Um die Ausrichtung bzw. das Aufspannen des Rades in der Vorrichtung zu erleichtern, kann ein Zentrierdorn vorgesehen sein, mittels dessen in das Mittenloch des Rades eingreifbar ist.

Vorteilhafterweise erfolgt nach dem Zuführen des Komplettrades ein Zentrieren des Komplettrades in der Vorrichtung mittels eines in ein Mittenloch des Rades eingreifenden Zentrierdornes, um das Rad in der Vorrichtung exakt zu positionieren.

In einer bevorzugten Ausführung weist das Verfahren nach der Verdrehung des Rades um den erforderlichen Drehwinkel die folgenden weiteren Schritte auf:
■ Zweites Erfassen der ersten Markierung (Matchpunkt) des Rades und der zweiten Markierung (Matchpunkt) des Reifens mittels eines Kamerasystems;
■ zweite Auswertung des Kamerabildes und Berechnung eines erforderlichen zweiten Drehwinkels.
■ Überprüfung des berechneten zweiten Drehwinkels;
■ Wiederholung der Verdrehung des Rades um den erforderlichen Drehwinkel mittels der drehbaren Spanneinheit sodass die erste Markierung (Matchpunkt) des Rades mit der zweiten Markierung (Matchpunkt) des Reifens auf der selben Winkelposition liegen, sofern der zweite Drehwinkel einen festlegbaren Grenzwert überschreitet.

Hierdurch ist es möglich, nicht nur eine Kontrolle nach dem Matchvorgang und somit eine Qualitätsüberwachung während des laufenden Produktionsprozesses sondern auch eine möglicherweise erforderliche Korrektur durch einen weiteren Matchvorgang unmittelbar durchzuführen. Hierdurch wird die Qualitätskontrolle erleichtert, da sie keinen gesonderten manuellen und/oder automatisierten Vorgang, insbesondere in einer weiteren Vorrichtung, nach dem Matchvorgang erfodert. Sofern ein weiterer Matchvorgang erfoderlich wurde, kann das Verfahren so ausgestaltet sein, dass in diesem Fall vor den weiteren Verfahrensschritten bis hin zum Abtransport des Komplettrades aus der Vorrichtung ein weiterer Kontrolldurchgang durch erneute Bilderfassung und -auswertung durchgeführt wird.

In einer vorteilhaften Weiterbildung des Verfahrens erfolgt nach dem Erfassen der ersten Markierung (Matchpunkt) des Rades und der zweiten Markierung (Matchpunkt) des Reifens mittels eines Kamerasystems eine Einstellung der Spannbacken auf den Durchmesser des Rades, insbesondere eine automatische Einstellung durch Ermittlung des Durchmessers des Rades mittels einer Bildauswertung. Hierdurch kann das Verfahren und die Vorrichtung auf verschiedene Rad-/Reifentypen bzw. -größen insbesondere vollautomatisch Anwendung finden, ohne dass die Gefahr einer Beschädigung durch fehlerhafte Einstellung der Spannbacken besteht.

Vorzugsweise wird vor der Verdrehung des Rades um den erforderlichen Drehwinkel mittels der drehbaren Spanneinheit ein Seifen des Rades und/oder des Reifens durchgeführt, um die Reibung zwischen Rad und Reifen während der Verdrehung zu minimieren und damit einerseits den benötigten Kraftaufwand seitens der Vorrichtung zur Durchführung des Verdrehvorgangs und gleichzeitig auch die Beanspruchung von Rad und Reifen während der Verdrehung zu verkleinern, d.h. den Vorgang materialschonend durchzuführen.

Ebenfalls der Minderung der Reibung zwischen Rad und Reifen dient das Einbringen von Seife als Gleitmittel im Bereich der Kontaktflächen zwischen Rad und Reifen.

Ein Ausführungsbeispiel der Erfindung ist in den Figuren dargestellt und wird nachfolgend erläutert. Es zeigen
- Fig. 1: Eine perspektivische Ansicht der erfindungsgemäßen Vorrichtung;
- Fig. 2: eine weitere perspektivische Ansicht der erfindungsgemäßen Vorrichtung mit einem aufgespannten Rad.

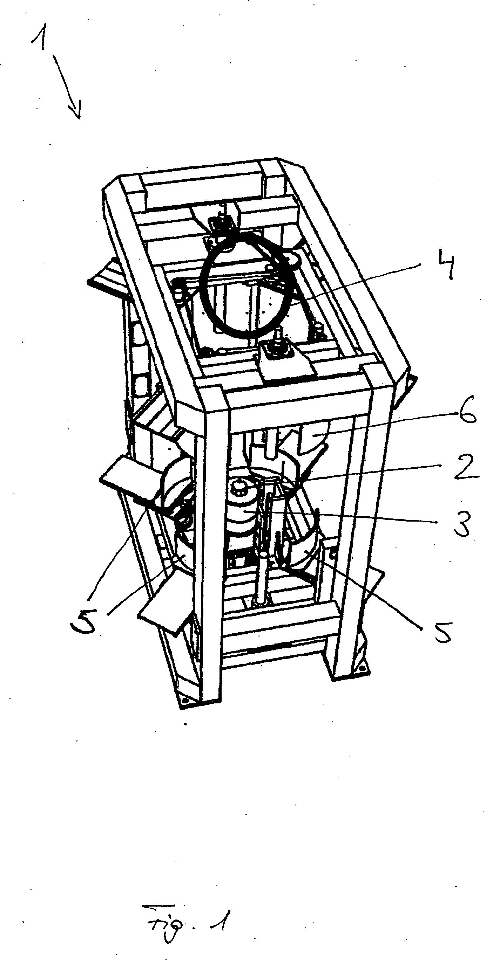

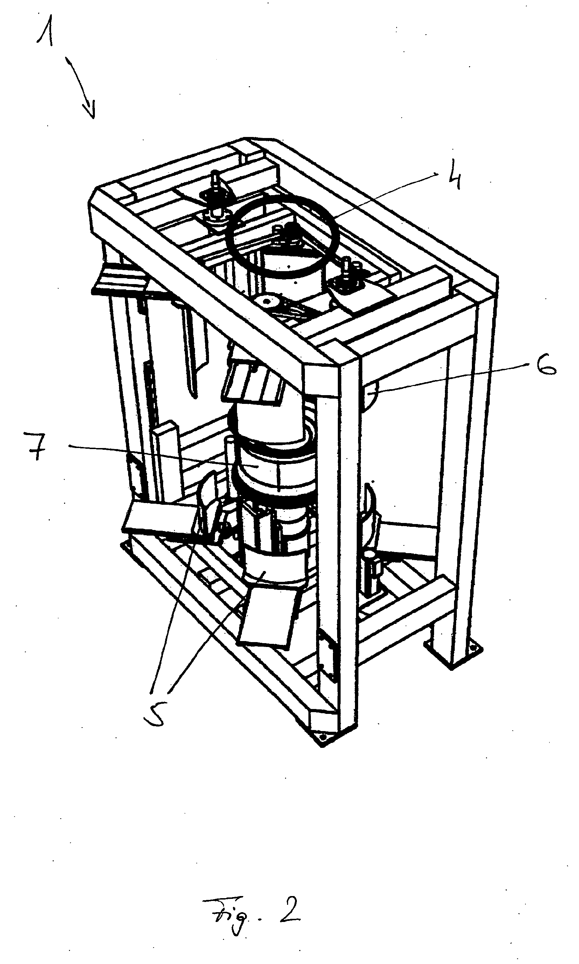

Bei der in Fig. 1 und Fig. 2 dargestellten Vorrichtung 1 zur drehwinkelgenauen Ausrichtung (Matchen) eines Reifens auf dem Rad 7 (Felge), erfolgt die Ausrichtung dadurch, dass das Rad 7 gegenüber dem (nicht dargestellten) Reifen relativ verdreht wird.

Das Rad 7 wird dazu mittels eines Zentrierdornes 2, der in das Mittenloch des Rades 7 eingreift und das Rad 7 in der Vorrichtung 1 exakt positioniert und ausgerichtet. Mittels einer in ein Mittenloch des Rades 7 eingreifenden Spanneinheit 3 ist das Rad 7 ergreifbar und drehbar oder festhaltbar.

Dadurch, dass die Spanneinheit 3 in das Mittenloch des Rades 3 eingreift, ist die Vorrichtung 1 auf verschiedenste Radtypen anwendbar, d.h. es ist keine Anpassung an das Radschüsseldesign erforderlich.

Dadurch, dass das Rad 7 von der Spanneinheit 3 von unten ergriffen wird, ist die Sicht auf das Rad 7 von oben frei. Oberhalb des Rades 7, d.h. auf der der Spanneinheit 3 gegenüberliegenden Seite des Rades 7 ist ein Kamerasystem 4 mit einem Rundblitz angeordnet.

Mittels des Blitzlichtes oder alternativ auch mittels einer abgestimmten Lichtquelle können die für das Kamerasystem 4 benötigten Lichtverhältnisse geschaffen werden. Das Kamerasystem 4 dient der Erfassung der Matchpunkte, d.h. der die Rundlaufabweichung kennzeichnenden Markierungen auf dem Rad 7 und auf dem Reifen.

Diese Markierungen werden bereits seitens der Rad- und Reifenhersteller angebracht. Dabei gilt die Vereinbarung, dass im Fall des Rades die Markierung an der Stelle größter Rundlaufabweichung angebracht wird und im Fall des Reifens die Markierung an der Stelle geringster Federrate des Reifenmaterials, da ein Reifen über dem Umfang Festigkeits- bzw. Elastizitätsschwankungen aufweist.

Ebenfalls möglich ist das sogenannte Unwuchtmatchen, bei dem zum Ausgleich von Unwuchten des Rades und des Reifens die Markierung an der Stelle größter Unwucht und im anderen Fall die Markierung exakt um 180° versetzt zur Stelle größter Unwucht angebracht wird, so dass sich bei einem Verdrehen des Rades relativ zum Reifen derart, dass die Markierungen genau auf derselben Winkelpositionen liegen, die Rundlaufabweichungen von Rad und Reifen weitgehend gegeneinander aufheben und sich nicht verstärkend überlagern.

Die Spanneinheit 3, die in das Mittenloch des Rades 7 eingreift, weist nicht dargestellte aufspreizbare Elemente in Form von Spannringsegmenten oder Spannringssektoren auf, so dass ein Aufspreizen zu einer gleichmäßigen Klemmung über dem Umfang führt und das Rad 7 nicht aus seiner exakten Lage in der Vorrichtung 1 heraus bewegt wird.

Das Kamerasystem 4 ist zentrisch über der Spannstation, d.h. der Spanneinheit 3 angeordnet. Mittels einer nicht dargestellten Auswerteeinheit wird das Kamerabild ausgewertet, d.h. es wird der erforderliche Drehwinkel sowie die Größe, d.h. der Durchmesser des Rades 7 und/oder des Reifens ermittelt.

Vier untere Spannbacken 5 und vier obere Spannbacken 6 sind in ihrer radialen Positionierung variabel und werden anhand der durch die Auswerteeinheit gelieferten Rad-/Reifendaten, d.h. des Durchmessers, automatisch auf die Rad-/Reifengröße eingestellt. Zur Lösung der Reifenflanken vom Rad zum Minimierung der Reibung bei Verdrehen des Rades relativ zum Reifen drücken die unteren und oberen Spannbacken 5, 6, die vertikal verfahrbar sind, die Reifenflanken bis über den Hump, d.h. soweit, um die Reifenflanken von dem Rad abzuheben.

Sodann erfolgt der Drehvorgang durch Verdrehung des mittels der drehbaren Spanneinheit 3 aufgespannten Rades 7 gegenüber dem zwischen den Spannbacken 5, 6 stillstehenden Reifen. Die Ansteuerung der drehbaren Spanneinheit 3 erfolgt durch eine Steuerungseinheit automatisch, d.h. die Drehung erfolgt um den durch die Auswerteeinheit berechneten nötigen Drehwinkel.

Im Anschluss an der Drehvorgang, d.h. das eigentliche Matchen, kann mittels des Kamerasysems eine Kontrolle durch die erneute Erfassung und anschließende Auswertung der Lage der Matchpunkte auf dem Rad 7 und dem Reifen erfolgen. Gegebenenfalls wird der Vorgang des Verdrehens des Rades 7 relativ zum Reifen wiederholt.

## Patentansprüche

1. Vorrichtung zur drehwinkelgenauen Ausrichtung (Matchen) eines Reifens auf dem Rad (7) (Felge), wobei die Ausrichtung **dadurch** erfolgt, dass das Rad (7) gegenüber dem Reifen relativ verdreht wird, **dadurch gekennzeichnet, dass** das Rad (7) mittels einer in ein Mittenloch des Rades (7) eingreifenden Spanneinheit (3) ergreifbar und drehbar oder festhaltbar ist, und dass Spannbacken (5, 6) in der Form mehrerer Umfangssegmente, insbesondere vier Umfangssegmente, insbesondere auf jeder Seite des Reifens, vorgesehen sind, die gegen die Reifenflanke bewegbar sind, wobei die Spannbacken (5, 6) auf den Durchmesser des Rades (7) einstellbar sind.

2. Vorrichtung nach Anspruch 1, **dadurch gekennzeichnet, dass** die in das Mittenloch des Rades (7) eingreifende Spanneinheit (3) aufspreizbare Elemente, insbesondere Spannringsegmente oder Spannringsektoren, aufweist.

3. Vorrichtung nach Anspruch 1 oder 2, **dadurch gekennzeichnet, dass** eine Kamera (4) zur Erfassung einer ersten Markierung (Matchpunkt) an dem Rad (7) und einer zweiten Markierung (Matchpunkt) an dem Reifen insbesondere zentrisch über der Spannstation angeordnet ist.

4. Vorrichtung nach Anspruch 3, **dadurch gekennzeichnet, dass** für die Kamera (4) zumindest ein Blitzlicht, insbesondere ein ringförmiges Blitzlicht, vorgesehen ist.

5. Vorrichtung nach einem der vorherigen Ansprüche, **dadurch gekennzeichnet, dass** Mittel vorgesehen sind, mittels derer der erforderliche Drehwinkel des Rades (7) gegenüber dem Reifen berechenbar ist.

6. Vorrichtung nach einem der vorherigen Ansprüche, **dadurch gekennzeichnet, dass** ein Zentrierdorn (2) vorgesehen ist, mittels dessen in das Mittenloch des Rades (7) eingreifbar ist.

7. Verfahren zur drehwinkelgenauen Ausrichtung (Matchen) eines Reifens auf dem Rad (Felge) (7), wobei die Ausrichtung insbesondere **dadurch** erfolgt, dass das Rad (7) gegenüber dem stillstehenden Reifen verdreht wird, insbesondere unter Anwendung einer Vorrichtung (1) nach einem der vorherigen Ansprüche, aufweisend die Schritte:
■ Aufspannen des Rades (7) durch Betätigung einer Spanneinheit (3);
■ Eindrücken der Reifenflanken mittels mehrerer Spannbacken (5, 6), um die Reifenflanken von dem Rad (7) abzuheben;
■ Verdrehung des Rades (7) um den erforderlichen Drehwinkel mittels einer drehbaren Spanneinheit (3) sodass die erste Markierung (Matchpunkt) des Rades (7) mit der zweiten Markierung (Matchpunkt) des Reifens auf der selben Winkelposition liegen;
■ Freigabe des Reifens durch Lösen der Spannbacken (5, 6) und Freigabe des Rades (7) durch Lösen der Spanneinheit (3);
**gekennzeichnet durch** folgende Schritte in ein und derselben Vorrichtung bzw. Station:
■ nach dem Zuführen des Rades, insbesondere des Komplettrades aus Rad (7) und Reifen, erfolgt ein Ergreifen des Rades (7) mittels einer in ein Mittenloch des Rades (7) eingreifenden Spanneinheit (3) und das Aufspannen des Rades (7) **durch** Betätigung der Spanneinheit (3), **durch** die das Rad (7) drehbar oder festhaltbar ist;
■ Erfassen der ersten Markierung (Matchpunkt) des Rades (7) und der zweiten Markierung (Matchpunkt) des Reifens mittels eines Kamerasystems (4);
■ Auswertung des Kamerabildes und Berechnung des erforderlichen Drehwinkels.
■ Eindrücken der Reifenflanken mittels mehrerer, insbesondere vier Umfangssegmente (Spannbacken) (5, 6), um die Reifenflanken von dem Rad (7) abzuheben;
■ Verdrehung des Rades (7) um den erforderlichen Drehwinkel mittels der drehbaren Spanneinheit (3) sodass die erste Markierung (Matchpunkt) des Rades (7) mit der zweiten Markierung (Matchpunkt) des Reifens auf der selben Winkelposition liegen;
■ Freigabe des Reifens **durch** Lösen der Spannbacken (5, 6);
■ Freigabe des Rades (7) **durch** Lösen der Spanneinheit (3);
■ Abtransport des Komplettrades aus der Vorrichtung (1).

8. Verfahren nach Anspruch 7, **dadurch gekennzeichnet, dass** nach dem Zuführen des Komplettrades ein Zentrieren des Komplettrades in der Vorrichtung (1) mittels eines in ein Mittenloch des Rades (7) eingreifenden Zentrierdornes (2) erfolgt.

9. Verfahren nach einem der Ansprüche 7 oder 8, **gekennzeichnet durch** folgende Schritte nach der Verdrehung des Rades (7) um den erforderlichen Drehwinkel:
■ zweites Erfassen der ersten Markierung (Matchpunkt) des Rades (7) und der zweiten Markierung (Matchpunkt) des Reifens mittels des Kamerasystems (4);
■ zweite Auswertung des Kamerabildes und Berechnung eines erforderlichen zweiten Drehwinkels;
■ Überprüfung des berechneten zweiten Drehwinkels;
■ Wiederholung der Verdrehung des Rades (7) um den erforderlichen Drehwinkel mittels der drehbaren Spanneinheit (3) sodass die erste Markierung (Matchpunkt) des Rades (7) mit der zweiten Markierung (Matchpunkt) des Reifens auf der selben Winkelposition liegen, sofern der zweite Drehwinkel einen festlegbaren Grenzwert überschreitet.

10. Verfahren nach einem der Ansprüche 7 bis 9, **dadurch gekennzeichnet, dass** nach dem Erfassen der ersten Markierung (Matchpunkt) des Rades (7) und der zweiten Markierung (Matchpunkt) des Reifens mittels des Kamerasystems (4) eine Einstellung der Spannbacken (5, 6) auf den Durchmesser des Rades (7), insbesondere eine automatische Einstellung durch Ermittlung des Durchmessers des Rades (7) mittels einer Bildauswertung, erfolgt.

11. Verfahren nach einem der Ansprüche 7 bis 10, **dadurch gekennzeichnet, dass** vor der Verdrehung des Rades (7) um den erforderlichen Drehwinkel mittels der drehbaren Spanneinheit (3) ein Seifen des Rades (7) und/oder des Reifens erfolgt.

## Claims

1. A device for alignment (matching), in terms of the precise angle of rotation, of a tyre on the wheel (7) (rim), the alignment being achieved by rotating the wheel (7) relative to the tyre, **characterized in that** the wheel (7) can be gripped by means of a clamping unit (3) which engages in a central hole in the wheel (7) so that it can be rotated or held fast, and **in that** clamping jaws (5, 6) in the form of a number of circumferential segments, in particular four circumferential segments disposed in particular on each side of the tyre, are provided which can be moved towards the wall of the tyre, said clamping jaws (5, 6) being adjustable to the diameter of the wheel (7).

2. A device according to Claim 1, **characterized in that** the clamping unit (3) which engages in the central hole of the wheel (7) has expandable elements, in particular clamping ring segments or clamping ring sectors.

3. A device according to Claim 1 or 2, **characterized in that** a camera (4) for detecting a first mark (matching point) on the wheel (7) and a second mark (matching point) on the tyre is in particular disposed centrally above the clamping station.

4. A device according to Claim 3, **characterized in that** at least one flashlight, in particular a circular flashlight, is provided for the camera (4).

5. A device according to one of the preceding claims, **characterized in that** means are provided by which the required angle of rotation of the wheel (7) relative to the tyre can be calculated.

6. A device according to one of the preceding claims, **characterized in that** a centring mandrel (2) is provided by means of which the wheel can be gripped via its central hole.

7. A method for the alignment (matching), in terms of the precise angle of rotation, of a tyre on the wheel (rim) (7), the alignment being achieved in particular by rotating the wheel (7) relative to the stationary tyre, in particular using a device (1) according to one of the preceding claims, said method comprising the following steps:
■ clamping of the wheel (7) by operation of a clamping unit (3);
■ pressing in of the walls of the tyre by means of a number of clamping jaws (5, 6) for removing the walls of the tyre from the wheel (7);
■ turning of the wheel (7) through the required angle of rotation by means of a rotatable clamping unit (3) so that the first mark (matching point) of the wheel (7) together with the second mark (matching point) of the tyre lie at the same angular position;
■ release of the tyre by releasing the clamping jaws (5, 6) and release of the wheel (7) by releasing the clamping unit (3);
**characterized by** the following steps in one and the same device or station:
■ upon delivery of the wheel, specifically the complete wheel made up of wheel (7) and tyre, the wheel (7) is gripped by means of a clamping unit (3) which engages in a central hole in the wheel (7) and the wheel (7) is clamped by operation of the clamping unit (3), by which the wheel (7) can be rotated or held fast;
■ detection of the first mark (matching point) of the wheel (7) and of the second mark (matching point) of the tyre by means of a camera system (4);
■ evaluation of the camera image and calculation of the required angle of rotation;
■ pressing in of the walls of the tyre by means of several, in particular four, circumferential segments (clamping jaws) (5, 6) for removing the walls of the tyre from the wheel (7);
■ turning of the wheel (7) through the required angle of rotation by means of the rotatable clamping unit (3) so that the first mark (matching point) of the wheel (7) together with the second mark (matching point) of the tyre lie at the same angular position;
■ release of the tyre by releasing the clamping jaws (5, 6);
■ release of the wheel (7) by releasing the clamping unit (3);
■ removal of the complete wheel from the device (1).

8. A method according to Claim 7, **characterized in that**, upon delivery of the complete wheel, the complete wheel is centred in the device (1) by means of a centring mandrel (2) which engages in a central hole in the wheel (7).

9. A method according to one of Claims 7 or 8, **characterized by** the following steps after the wheel (7) has been rotated through the required angle of rotation:
■ second detection of the first mark (matching point) of the wheel (7) and of the second mark (matching point) of the tyre by means of the camera system (4);
■ second evaluation of the camera image and calculation of a required second angle of rotation;
■ checking of the calculated second angle of rotation;
■ repetition of the turning of the wheel (7) through the required angle of rotation by means of the rotatable clamping unit (3) so that the first mark (matching point) of the wheel (7) together with the second mark (matching point) of the tyre lie at the same angular position, if the second angle of rotation exceeds a preset threshold value.

10. A method according to one of Claims 7 to 9, **characterized in that**, upon detection of the first mark (matching point) of the wheel (7) and of the second mark (matching point) of the tyre by means of the camera system (4), the clamping jaws (5, 6) are adjusted to the diameter of the wheel (7), in particular they are automatically adjusted through determination of the diameter of the wheel (7) by means of an image evaluation.

11. A method according to one of Claims 7 to 10, **characterized in that**, prior to turning of the wheel (7) through the required angle of rotation by means of the rotatable clamping unit (3), the wheel (7) and/or tyre are soaped.

## Revendications

1. Dispositif pour l'alignement angulaire exact (matching) d'un pneu sur la roue (7) (jante), l'alignement s'effectuant du fait que la roue (7) est tournée par rapport au pneu, **caractérisé en ce que** la roue (7) peut être saisie et tournée ou maintenue au moyen d'une unité de serrage (3) s'engageant dans un trou central de la roue (7), et que des mâchoires de serrage (5, 6) en forme de plusieurs segments circonférentiels, notamment quatre segments circonférentiels, sont prévues, en particulier sur chaque côté du pneu, lesquelles peuvent être déplacées contre le flanc du pneu, les mâchoires de serrage (5, 6) étant alors réglables sur le diamètre de la roue (7).

2. Dispositif suivant la revendication 1, **caractérisé en ce que** l'unité de serrage (3), s'engageant dans le trou central de la roue (7), présente des éléments écartables, en particulier des segments annulaires de serrage ou des secteurs annulaires de serrage.

3. Dispositif suivant l'une des revendications 1 et 2, **caractérisé en ce qu'**une caméra (4) est disposée, en particulier de façon centrale au-dessus du poste de serrage, pour détecter un premier repère (point d'alignement) sur la roue (7) et un second repère (point d'alignement) sur le pneu.

4. Dispositif suivant la revendication 3, **caractérisé en ce qu'**un flash, en particulier une lampe-éclair annulaire, est prévu pour la caméra (4).

5. Dispositif suivant l'une des revendications précédentes, **caractérisé en ce que** sont prévus des moyens, qui permettent de calculer l'angle de rotation requis de la roue (7) par rapport au pneu.

6. Dispositif suivant l'une des revendications précédentes, **caractérisé en ce qu'**il est prévu un mandrin de centrage (2) qui peut s'engager dans le trou central de la roue (7).

7. Procédé d'alignement angulaire exact (matching) d'un pneu sur la roue (jante) (7), l'alignement s'effectuant en particulier du fait que la roue (7) est tournée par rapport au pneu immobile, en particulier en utilisant un dispositif (1) suivant l'une des revendications précédentes, comprenant les étapes suivantes :
- fixation de la roue (7) par actionnement d'une unité de serrage (3) ;
- pression dans les flancs de pneu au moyen de plusieurs mâchoires de serrage (5, 6), pour décoller les flancs de pneu de la roue (7) ;
- rotation de la roue (7) de l'angle de rotation requis au moyen d'une unité de serrage (3) tournante, de sorte que le premier repère (point d'alignement) de la roue (7) et le second repère (point d'alignement) du pneu se situent sur la même position angulaire ;
- dégagement du pneu par desserrage des mâchoires de serrage (5, 6) et dégagement de la roue (7) par desserrage de l'unité de serrage (3) ;
**caractérisé par** des étapes suivantes dans un seul et même dispositif ou poste :
- après l'amenée de la roue, en particulier de la roue complète constituée de la roue (7) et du pneu, saisie de la roue (7) au moyen d'une unité de serrage (3), s'engageant dans un trou central de la roue (7), et fixation de la roue (7) par actionnement de l'unité de serrage (3), par laquelle peut être tournée ou maintenue la roue (7) ;
- détection du premier repère (point d'alignement) de la roue (7) et du second repère (point d'alignement) du pneu au moyen d'un système de caméra (4) ;
- évaluation de l'image de la caméra et calcul de l'angle de rotation requis ;
- pression dans les flancs de pneu au moyen de plusieurs, en particulier quatre, segments circonférentiels (mâchoires de serrage) (5, 6), pour décoller les flancs de pneu de la roue (7) ;
- rotation de la roue (7) de l'angle de rotation requis au moyen de l'unité de serrage (3) tournante, de sorte que le premier repère (point d'alignement) de la roue (7) et le second repère (point d'alignement) du pneu se situent sur la même position angulaire ;
- dégagement du pneu par desserrage des mâchoires de serrage (5, 6) ;
- dégagement de la roue (7) par desserrage de l'unité de serrage (3) ;
- évacuation de la roue complète hors du dispositif (1).

8. Procédé suivant la revendication 7, **caractérisé en ce que**, après l'amenée de la roue complète, il s'effectue un centrage de cette dernière dans le dispositif (1) au moyen d'un mandrin de centrage (2) s'engageant dans un trou central de la roue (7).

9. Procédé suivant l'une des revendications 7 et 8, **caractérisé par** des étapes suivantes après la rotation de la roue (7) de l'angle de rotation requis :
- seconde détection du premier repère (point d'alignement) de la roue (7) et du second repère (point d'alignement) du pneu au moyen du système de caméra (4) ;
- seconde évaluation de l'image de la caméra et calcul d'un second angle de rotation requis,
- vérification du second angle de rotation calculé ;
- réitération de la rotation de la roue (7) de l'angle de rotation requis au moyen de l'unité de serrage (3) tournante, de sorte que le premier repère (point d'alignement) de la roue (7) et le second repère (point d'alignement) du pneu se situent sur la même position angulaire, dans la mesure où le second angle de rotation dépasse par le haut un seuil définissable.

10. Procédé suivant l'une des revendications 7 à 9, **caractérisé en ce que**, après la détection du premier repère (point d'alignement) de la roue (7) et du second repère (point d'alignement) du pneu au moyen du système de caméra (4), il s'effectue un réglage des mâchoires de serrage (5, 6) sur le diamètre de la roue (7), en particulier un réglage automatique par détermination du diamètre de la roue (7) au moyen d'une évaluation d'image.

11. Procédé suivant l'une des revendications 7 à 10, **caractérisé en ce qu'**un savonnage de la roue (7) et/ou du pneu est effectué avant la rotation de la roue (7) de l'angle de rotation requis au moyen de l'unité de serrage tournante (3).
